# EUROPÄISCHE PATENTANMELDUNG

(11) **EP 1 637 384 A2**
(43) Veröffentlichungstag der Anmeldung: **22.03.2006**
(21) Anmeldenummer: 05017084.4
(22) Anmeldetag: 05.08.2005
(51) Int. Cl.: B60K 17/356

(54) **Fahrantrieb eines Fahrzeugs**

(30) Priorität: 17.09.2004 DE 102004045684
(71) Anmelder: CLAAS Selbstfahrende Erntemaschinen GmbH, 33428 Harsewinkel (DE)
(72) Erfinder: Gersmann, Manfred, 48231 Warendorf (DE); Cazacu, Heiko, 33178 Borchen (DE)

(57) **Zusammenfassung**

Die Erfindung betrifft einen Fahrantrieb (29) eines Fahrzeugs (1, 2) wobei das dem Fahrzeug (1, 2) zugeordnete Fahrwerk (3) eine Vielzahl von Fahrzeugachsen (8) mit von diesen Fahrzeugachsen (8) getragenen Laufrädern (4, 6) aufweist und die Laufräder (4, 6) zumindest teilweise mittels Allradantriebssystem (29) angetrieben werden und der Allradantrieb (29) der Laufräder (4, 6) in Abhängigkeit von der Fahrgeschwindigkeit (vF) des Fahrzeugs (1, 2) regelbar ist. Auf diese Weise wird sichergestellt, dass das Fahrzeug (1, 2) einerseits in schwerem Gelände eine hohe Fahrstabilität aufweist und andererseits auf gut befahrbarem Untergrund effizient eingesetzt werden kann, ohne dass die Allradfunktion höheren Fahrgeschwindigkeiten (vF) des Fahrzeugs (1, 2) entgegensteht.

## Beschreibung

Die Erfindung betrifft einen Fahrantrieb eines Fahrzeugs nach dem Oberbegriff des Anspruchs 1.

Insbesondere sogenannte Off-Road-Fahrzeuge, wie etwa landwirtschaftliche Arbeitsmaschinen, werden häufig in schwer befahrbarem Gelände eingesetzt. In Abhängigkeit von der Beschaffenheit des zu befahrenden Geländes und der Masse des Fahrzeuges neigen die Laufräder dieser Fahrzeuge zum sogenannten Durchdrehen. Diese Schlupferscheinungen können im ungünstigsten Fall dazu führen, dass ein Fortbewegen das Fahrzeugs unmöglich wird. Im landtechnischen Anwendungsfall hat dies vor allem den Nachteil, dass Feldbearbeitungsprozesse zur Wiederherstellung der Fahrtüchtigkeit des jeweiligen Fahrzeugs unterbrochen oder unter Umständen ganz eingestellt werden müssen, bis die Befahrbarkeit des zu bearbeitenden Geländes, beispielsweise durch Abtrocknung des Bodens, gegeben ist.

Um die Fortbewegungsprobleme von Fahrzeugen in schwierigem Gelände zu reduzieren, werden seit langem sogenannte Allradantriebssysteme eingesetzt, die zugleich jedes Laufrad eines Fahrzeugs aktiv antreiben, sodass sich das Durchdre-hen einzelner Laufräder nicht mehr so nachhaltig auf das Fortbewegungsverhalten des Fahrzeugs in schwer befahrbarem Gelände auswirkt. Neben einer Verbesserung des Fahrverhaltens in schwerem Gelände führen Allradsysteme wegen verschiedenster konstruktiver Zusammenhänge immer auch zu einer Begrenzung der maximalen Fahrgeschwindigkeit, die in der Regel deutlich unter der maximalen Fahrgeschwindigkeit des Fahrzeugs ohne Allradantrieb liegt. Mithin steht der Einsatz von Allradsystemen einer effizienten Fortbewegung eines Fahrzeugs in leicht befahrbarem Gelände, wie etwa Straßen, entgegen. Gemäß der DE 42 10 251 sind Ausführungen bekannt, die diese Nachteile dadurch überwinden wollen, dass die Allradfunktion in Abhängigkeit von den Schlupfverhältnissen zu- und abschaltbar ist, wobei die Zuschaltung der Allradfunktion in der Weise bewirkt wird, dass dem Fahrzeug zusätzliche Antriebe zugeordnet sind, die im Bedarfsfall weitere Laufräder des Fahrzeugs aktiv antreiben. Der wesentliche Nachteil derartiger Systeme besteht darin, dass so ausgestattete Fahrzeuge nur in den Betriebsarten -Allradfunktion ein- und - Allradfunktion aus- betrieben werden können. Oft sind die realen Fahrbedingungen jedoch so gestaltet, dass selbst auf leicht befahrbaren Straßen Situationen eintreten können, die das Fortbewegungsverhalten eines Fahrzeugs negativ beeinflussen. Dies ist insbesondere bei feuchten und rutschigen Straßen sowie Bergauffahrten der Fall. In den meisten aller Einsatzbedingungen stellt die Fortbewegung des Fahrzeugs einen Kompromiss aus Fahrstabilität und effizientem Einsatz des Fahrzeugs dar.

Es ist deshalb Aufgabe der Erfindung einen Fahrantrieb für Fahrzeuge vorzuschlagen, welcher die beschriebenen Nachteile des Standes der Technik vermeidet und insbesondere eine hohe Fahrstabilität und einen effizienten Einsatz des Fahrzeugs in unterschiedlichstem Gelände ermöglicht.

Diese Aufgabe wird erfindungsgemäß durch die kennzeichnenden Merkmale des Anspruchs 1 gelöst.

Indem der Allradantrieb der Laufräder in Abhängigkeit von einem Fahrgeschwindigkeitssignal des Fahrzeugs regelbar ist, wird sichergestellt, dass das Fahrzeug einerseits in schwerem Gelände eine hohe Fahrstabilität aufweist und andererseits auf gut befahrbarem Untergrund effizient eingesetzt werden kann, ohne dass die Allradfunktion höheren Fahrgeschwindigkeiten des Fahrzeugs entgegensteht.

Wegen der die Fahrgeschwindigkeit begrenzenden Gestaltung von Allradantrieben ist in einer vorteilhaften Ausgestaltung der Erfindung vorgesehen, dass die Intensität der Allradfunktion mit steigender Fahrgeschwindigkeit abnimmt:

Um eine hohe Flexibilität in der Anwendung der fahrgeschwindigkeitsabhängigen Beeinflussung der Allradfunktion zu erreichen, ist in einer weitern vorteilhaften Ausgestaltung der Erfindung vorgesehen, dass die Allradfunktion für jedes Laufrad und/oder jede Fahrzeugachse separat regelbar ist.

Eine konstruktiv einfache Umsetzung der Regelbarkeit der Allradfunktion ergibt sich dann, wenn das erforderliche Regelungssystem elektro-hydraulisch arbeitet.

In vorteilhafter Weiterbildung der Erfindung werden einfach umsetzbare Regelstrukturen dann erreicht, wenn den Laufrädern separat antreibbare Radmotoren zugeordnet sind und das Antriebsmoment dieser Radmotoren in der Weise regelbar ist, dass die von einer Steuereinrichtung empfangenen, der Fahrgeschwindigkeit des Fahrzeugs proportionalen Eingangssignale in das Antriebsmoment regelnde Steuersignale der Radmotoren transformiert werden. In diesem Zusammenhang ist es von Vorteil, wenn die Radmotoren selbst als Hydromotoren ausgebildet sind und die Steuersignale der Steuereinrichtung das Schluckvolumen der Hydromotoren regeln.

In an sich bekannter Weise können die Fahrgeschwindigkeitssignale im einfachsten Fall dadurch generiert werden, dass dem Fahrzeug ein mit einem Winkelsensor gekoppelter verschwenkbarer Fahrhebel zugeordnete ist aus dessen Auslenkung ein Fahrgeschwindigkeitssignal abgeleitet wird, wobei zur Generierung des Fahrgeschwindigkeitssignals aus dem Positionssignal des Winkelsensors in zumindest einem Prozessor einer Steuereinrichtung Kennlinien hinterlegt sind, die die Fahrgeschwindigkeit in Abhängigkeit von der Position des Fahrhebels definieren.

In vorteilhafter Weiterbildung der Erfindung kann die Regelung des Schluckvolumens der Hydromotoren in Abhängigkeit von dem Fahrgeschwindigkeitssignal in der Weise erfolgen, dass zur Generierung des Schluckvolumensignals aus dem Fahrgeschwindigkeitssignal in zumindest einem Prozessor einer Steuereinrichtung Kennlinien hinterlegt sind, die das Schluckvolumen der Hydromotoren in Abhängigkeit von der Fahrgeschwindigkeit des Fahrzeugs definieren.

Zur Vereinfachung des schaltungstechnischen Aufbaus, können die Parameter ermittelnden Prozessoren auch in einem einzigen Prozessor abgebildet sein. Eine hohe Flexibilität des Regelungssystems wird dann erreicht, wenn der oder die Prozessoren unmittelbar in die jeweilige Fahrzeugachse integriert sind. Dies hat insbesondere den Vorteil, dass spezielle Charakteristiken der Radmotoren einer Fahrzeugachse spezifisch auf die jeweilige Achse abgestimmt werden können und damit eine Integration beliebiger Fahrzeugachsen in ein übergeordnetes Regelungssystem einfach umsetzbar ist.

Eine kostengünstige Umsetzung der Erfindung ergibt sich dann, wenn der Steuereinrichtung des Fahrzeugs der oder die Prozessoren zur Ansteuerung der Hydromotoren zugeordnet ist.

Eine noch feinere Anpassung der Allradfunktion des Fahrzeugs an das Fahrgeschwindigkeitssignal wird dann erreicht, wenn dem Fahrzeug ein in verschiedenen Gängen betreibbares Schaltgetriebe zugeordnet ist und die Allradfunktion zumindest einer Fahrzeugachse in Abhängigkeit von der Fahrzeuggeschwindigkeit und dem aktivierten Gang geregelt wird. Dies hat insbesondere den Vorteil, dass die Fahrgeschwindigkeitsanpassung nur in den jeweils zulässigen Bereichen vorgenommen wird und Getriebeüberlastungen vermieden werden.

Eine kostengünstige Ausführung der erfindungsgemäßen Steuereinrichtung ergibt sich zudem dann, wenn die Anpassung der Allradfunktion an das Fahrgeschwindigkeitssignal allein auf die Hinterachse des Fahrzeugs beschränkt bleibt.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: die schematische Seitenansicht eines als Mähdrescher ausgeführten Fahrzeugs
- Figur 2: eine schematische Draufsicht auf das Fahrwerk des Fahrzeugs nach Figur 1

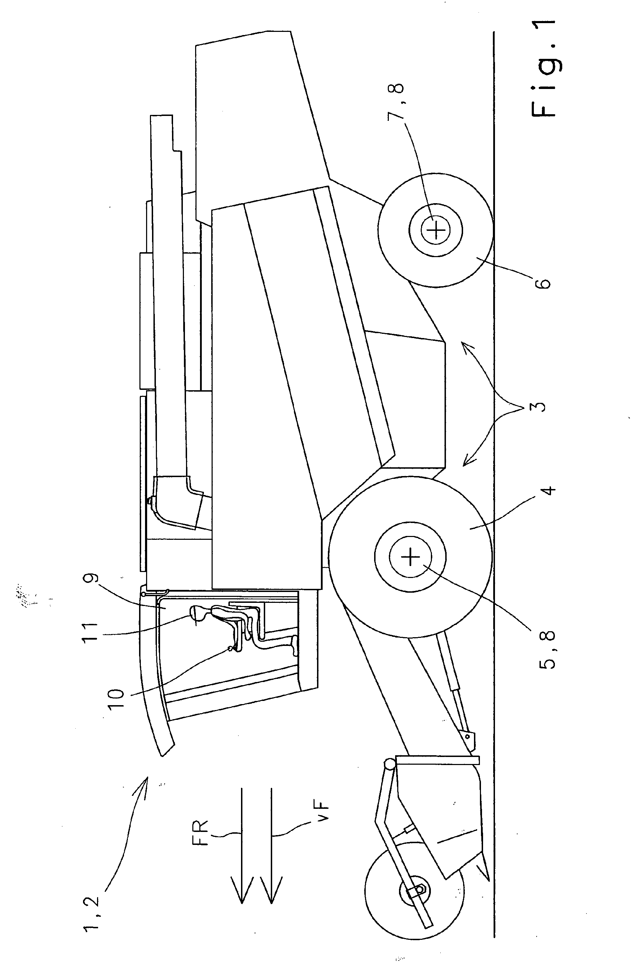

Figur 1 zeigt beispielhaft ein als Mähdrescher 2 ausgeführtes Fahrzeug 1, dessen Fahrwerk 3 von zumindest einer Laufräder 4 tragenden Vorderachse 5 und einer dieser nachgeordneten, ebenfalls Laufräder 6 aufnehmenden Hinterachse 7 gebildet wird. Es liegt im Rahmen der Erfindung, dass das Fahrzeug 1 über eine Vielzahl von Fahrzeugachsen 8 verfügen kann und die Laufräder 4, 6 einer Fahrzeugachse 8 auch durch an sich bekannte und deshalb nicht dargestellte Raupenlaufwerke ersetzt sein können. In Fahrtrichtung FR vorn liegend ist dem Fahrzeug 1 eine Fahrerkabine 9 zugeordnet, in der unter anderem ein sogenannter Fahrhebel 10 positioniert ist über dessen Betätigung der Betreiber 11 des Fahrzeugs 1 in noch näher zu beschreibender Weise die Fahrgeschwindigkeit vF des Fahrzeugs 1 einstellen kann.

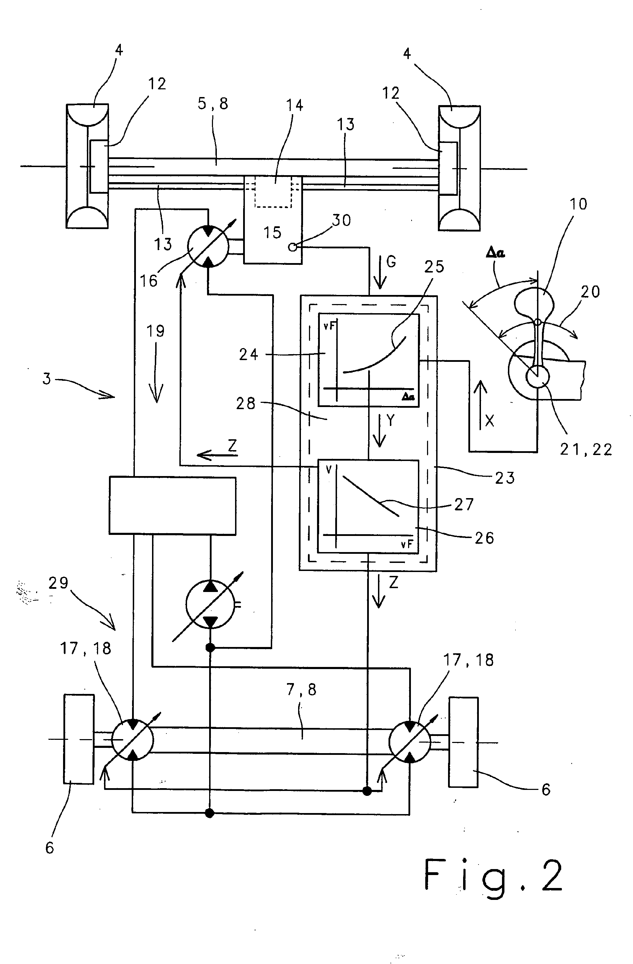

Gemäß Figur 2 bildet die Vorderachse 5 die aktiv angetriebene Fahrzeugachse 8. Im dargestellten Ausführungsbeispiel sind den Laufrädern 4 der Vorderachse 5 mechanische Radmotoren 12 zugeordnet, die über Antriebswellen 13 mit der Differentialeinheit 14 eines Schaltgetriebes 15 antriebsverbunden sind. Das Schaltgetriebe 15 selbst bezieht seine Antriebsenergie über einen an das Schaltgetriebe 15 angeflanschten Hydromotor 16. Demgegenüber sind den Laufrädern 6 der Hinterachse 7 unmittelbar als Hydromotoren 17 ausgebildete Radmotoren 18 zugeordnet. Es liegt im Rahmen der Erfindung, dass jedes Laufrad 6 der Fahrzeugachsen 8 von einem separaten Hydromotor 16, 17 angetrieben werden kann. In an sich bekannter und deshalb nicht näher dargestellter Weise sind die verschiedenen Hydromotoren 16, 17 des Fahrwerks 3 in einen schematisch angedeuteten Hydraulikkreislauf 19 eingebunden. Zur Festlegung der Fahrgeschwindigkeit vF des Fahrzeugs 1 kann der in die Fahrerkabine 9 integrierte Fahrhebel 10 gemäß der angegebenen Pfeilrichtung 20 verschwenkt werden, wobei regelmäßig das Verschwenken des Fahrhebels 10 nach vorn die Erhöhung der Fahrgeschwindigkeit vF bei Vorwärtsfahrt und das Verschwenken des Fahrhebels 10 nach hinten die Erhöhung der Fahrgeschwindigkeit vF bei Rückwärtsfahrt bedeutet. Indem der Fahrhebel 10 mit einem als Drehpotentiometer 21, ausgeführten Winkelsensor 22 in Wirkverbindung steht, wird ein von der Neigung Δα des Fahrhebels 10 abhängiges Positionssignal X des Fahrhebels 10 generiert. Dieses Positionssignal X wird in dem dargestellten Ausführungsbeispiel an eine Steuereinrichtung 23 der zumindest ein erster Prozessor 24 zugeordnet ist, der das Positionssignal X in ein Fahrgeschwindigkeitssignal Y umrechnet, übergeben. Hierfür sind in dem Prozessor 24 Kennlinien 25 hinterlegt, die die Fahrgeschwindigkeit vF in Abhängigkeit von der Auslenkung Δα des Fahrhebels 10 definieren. Das generierte Fahrgeschwindigkeitssignal vF wird innerhalb der Steuereinrichtung 23 an einen weiteren Prozessor 26 übergeben und in diesem weiteren Prozessor 26 in ein Schluckvolumensignal Z umgerechnet. Hierfür sind in dem weiteren Prozessor 26 wiederum Kennlinien 27 hinterlegt, die die Schluckvolumen V der jeweiligen Hydromotoren 16, 17 in Abhängigkeit von dem Fahrgeschwindigkeitssignal Y definieren. Es liegt im Rahmen der Erfindung, dass die ersten und zweiten Prozessoren 24, 26 von einem einzigen Prozessor 28 gebildet werden, in dem die jeweiligen Kennlinien 25, 27 hinterlegt sind, sodass der Prozessor 28 unmittelbar aus Positionssignalen X des Fahrhebels 10 ein Schluckvolumensignal Z generiert. Ferner können die getrennten Prozessoren 24, 26 oder der komplexe Prozessor 28 unmittelbar in die Fahrzeugachse 8 integriert sein, deren Hydromotoren 17 durch die Prozessoren 24, 26, 28 angesteuert werden sollen. Indem nun das Schluckvolumen V der Hydromotoren 16, 17 in Abhängigkeit von dem Fahrgeschwindigkeitssignal Y änderbar ist wird in erfindungsgemäßer Weise eine Möglichkeit geschaffen, den Allradantrieb 29 der Laufräder 4, 6 des Fahrzeugs 1 in Abhängigkeit von dem Fahrgeschwindigkeitssignal Y, welches der vom Betreiber 11 gewünschten Fahrgeschwindigkeit vF entspricht, zu regeln. Gemäß der dargestellten Schluckvolumenkennlinie 27 erfolgt die Regelung in der Weise, dass die Intensität der Allradfunktion mit zunehmender Fahrgeschwindigkeit vF abnimmt. Je nach Ausführung des Fahrwerks 3 können die generierten Schluckvolumensignale Z für eine Vielzahl von Fahrzeugachsen 8 und/oder eine Vielzahl von Radmotoren 18 generierte werden, sodass die Beeinflussung der Allradfunktion nicht auf eine einzige Fahrzeugachse 8 und deren Radmotoren 18 beschränkt ist.

In an sich bekannter Weise können die Schluckvolumensignale Z elektrisch oder hydraulisch an die jeweiligen Hydromotoren 16, 17 übertragen werden, um deren Verschwenken zu bewirken. Mit dem Verschwenken der Hydromotoren 16, 17 ändert sich deren Schluckvolumen V schließlich gemäß der in den Schluckvolumensignalen Z codierten Größe, wobei ein Schluckvolumen der Größe Null dem Abschalten der Allradfunktion entspricht.

In einer weiteren vorteilhaften Ausgestaltung der Erfindung kann dem Schaltgetriebe 15 ein sogenannter Gangsensor 30 zugeordnet sein, dessen Ausgangssignal G eine Information über den am Schaltgetriebe 15 aktivierten Gang umfasst. Dieses Ausgangssignal G wird ebenfalls an die mit der Steuereinrichtung 23 gekoppelten Prozessoren 24, 26, 28 übermittelt. Da insbesondere bei sogenannten Off-Road-Fahrzeugen 1, zu denen auch der dargestellte Mähdrescher 2 gehört, im Off-Road-Einsatz regelmäßig nur die unteren Gänge aktiviert sind und die Allradfunktion während dieses Einsatzes kaum abgeschaltet ist, können die in den Prozessoren 24, 26, 28 hinterlegten Kennlinien 25, 27 zudem in Abhängigkeit von dem momentan aktiven Gang im Schaltgetriebe 15 definiert sein. Dies erhöht einerseits die Flexibilität der Anpassung der Allradfunktion an die gewählte Fahrgeschwindigkeit und vermeidet zudem das Betreiben des Fahrzeugs 1 in kritischen Bereichen.

Es liegt im Rahmen des Könnens eines Fachmanns den beschriebenen Fahrantrieb 29 in nicht dargestellter Weise abzuwandeln oder in anderen als den dargestellten Anwendungsfällen einzusetzen, um die beschriebenen Effekte zu erzielen, ohne dabei den Rahmen der Erfindung zu verlassen.

### Bezugszeichenliste:

- 1: Fahrzeug
- 2: Mähdrescher
- 3: Fahrwerk
- 4: Laufräder
- 5: Vorderachse
- 6: Laufräder
- 7: Hinterachse
- 8: Fahrzeugachse
- 9: Fahrerkabine
- 10: Fahrhebel
- 11: Betreiber
- 12: Radmotor
- 13: Antriebswelle
- 14: Differentialeinheit
- 15: Schaltgetriebe
- 16: Hydromotor
- 17: Hydromotor
- 18: Radmotor
- 19: Hydraulikkreislauf
- 20: Pfeilrichtung
- 21: Drehpotentiometer
- 22: Winkelsensor
- 23: Steuereinrichtung
- 24: Prozessor
- 25: Kennlinie
- 26: Prozessor
- 27: Kennlinie
- 28: Prozessor
- 29: Allradantrieb
- 30: Gangsensor

- G: Ausgangssignal
- FR: Fahrtrichtung
- vF: Fahrgeschwindigkeit
- Δϕ: Neigung Fahrhebel
- V: Schluckvolumen
- X: Positionssignal
- Y: Fahrgeschwindigkeitssignal
- Z: Schluckvolumensignal

## Patentansprüche

1. Fahrantrieb eines Fahrzeugs wobei das dem Fahrzeug zugeordnete Fahrwerk eine Vielzahl von Fahrzeugachsen mit von diesen Fahrzeugachsen getragenen Laufrädern aufweist und die Laufräder zumindest teilweise mittels Allradantriebssystem angetrieben werden,
**dadurch gekennzeichnet,**
**dass** der Allradantrieb (29) der Laufräder (4, 6) in Abhängigkeit von der Fahrgeschwindigkeit (vF) des Fahrzeugs (1, 2) regelbar ist.

2. Fahrantrieb eines Fahrzeugs nach Anspruch 1,
**dadurch gekennzeichnet,**
**dass** die Intensität der Allradfunktion mit steigender Fahrgeschwindigkeit (vF) des Fahrzeugs (1, 2) abnimmt.

3. Fahrantrieb eines Fahrzeugs nach einem der vorhergehenden Ansprüche,
**dadurch gekennzeichnet,**
**dass** die Allradfunktion für jedes Laufrad (4, 6) und/oder jede Fahrzeugachse (8) regelbar ist.

4. Fahrantrieb eines Fahrzeugs nach einem der vorhergehenden Ansprüche,
**dadurch gekennzeichnet,**
**dass** die Regelung der Allradfunktion der Laufräder (4, 6) elektro-hydraulisch erfolgt.

5. Fahrantrieb eines Fahrzeugs nach Anspruch 4,
**dadurch gekennzeichnet,**
**dass** den Laufrädern (4, 6) separat antreibbare Radmotoren (12, 18) zugeordnet sind und das Antriebsmoment der Radmotoren (12, 18) in der Weise regelbar - ist, dass die von einer Steuereinrichtung (23) empfangenen, der Fahrgeschwindigkeit (vF) des Fahrzeugs (1) proportionalen, Eingangssignale (X) in das Antriebsmoment regelnde Steuersignale (Z) der Radmotoren (12, 18) transformiert werden.

6. Fahrantrieb eines Fahrzeugs nach Anspruch 5,
**dadurch gekennzeichnet,**
**dass** die Radmotoren (12, 18) als Hydromotoren (16, 17) ausgebildet sind und die Steuersignale (Z) das Schluckvolumen (V) der Hydromotoren (16, 17) regeln.

7. Fahrantrieb eines Fahrzeugs nach einem der vorhergehenden Ansprüche,
**dadurch gekennzeichnet,**
**dass** dem Fahrzeug (1, 2) zur Definition der Fahrgeschwindigkeit (vF) ein Fahrhebel (10) zugeordnet ist und die Auslenkung (Δϕ) des Fahrhebels (10) mittels Winkelsensor (22) ermittelt und aus dieser Auslenkung (Δα) das Fahrgeschwindigkeitssignal (Y) generiert wird.

8. Fahrantrieb eines Fahrzeugs nach Anspruch 7,
**dadurch gekennzeichnet,**
**dass** zur Generierung des Fahrgeschwindigkeitssignals (Y) aus dem Positionssignal (X) des Winkelsensors (22) in zumindest einem Prozessor (24, 28) der Steuereinrichtung (23) Kennlinien (25) hinterlegt sind, die die Fahrgeschwindigkeit (vF) in Abhängigkeit von der Position (Δϕ) des Fahrhebels (10) definieren.

9. Fahrantrieb eines Fahrzeugs nach einem der vorhergehenden Ansprüche,
**dadurch gekennzeichnet,**
**dass** zur Generierung des Schluckvolumensignals (Y) aus dem Fahrgeschwindigkeitssignal (Y) in zumindest einem Prozessor (26, 28) der Steuereinrichtung (23) Kennlinien (27) hinterlegt sind, die das Schluckvolumen (V) der Hydromotoren (16, 17) in Abhängigkeit von der Fahrgeschwindigkeit (vF) des Fahrzeugs (1, 2) definieren.

10. Fahrantrieb eines Fahrzeugs nach einem der vorhergehenden Ansprüche,
**dadurch gekennzeichnet,**
**dass** das Schluckvolumensignal (Z) zur Regelung des Schluckvolumens (V) der Hydromotoren (16, 17) herangezogen wird.

11. Fahrantrieb eines Fahrzeugs nach einem der vorhergehenden Ansprüche,
**dadurch gekennzeichnet,**
**dass** die jeweiligen Prozessoren (24, 26) in einem Prozessor (28) zusammengefasst sind.

12. Fahrantrieb eines Fahrzeugs nach einem der vorhergehenden Ansprüche,
**dadurch gekennzeichnet,**
**dass** die jeweiligen Prozessoren (24, 26, 28) der jeweiligen Fahrzeugachse (8) zugeordnet sind.

13. Fahrantrieb eines Fahrzeugs nach einem der vorhergehenden Ansprüche,
**dadurch gekennzeichnet,**
**dass** die Prozessoren Bestandteil der Steuereinrichtung (23) sind.

14. Fahrantrieb eines Fahrzeugs nach einem der vorhergehenden Ansprüche,
**dadurch gekennzeichnet,**
**dass** dem Fahrzeug (1, 2) ein in verschiedenen Gängen betreibbares Schaltgetriebe (15) zugeordnet ist und die Allradfunktion zumindest einer Fahrzeugachse (8) in Abhängigkeit von der Fahrzeuggeschwindigkeit (vF) und dem aktivierten Gang geregelt wird.

15. Fahrantrieb eines Fahrzeugs nach einem der vorhergehenden Ansprüche,
**dadurch gekennzeichnet,**
**dass** die zumindest eine Fahrzeugachse (8) von der Hinterachse (7) des Fahrzeugs gebildet wird.
